# EUROPÄISCHE PATENTSCHRIFT

(11) **EP 2 989 145 B1**
(45) Veröffentlichungstag und Bekanntmachung des Hinweises auf die Patenterteilung: **09.10.2019**
(21) Anmeldenummer: 14717740.6
(22) Anmeldetag: 11.04.2014
(51) Int. Cl.: C08G 77/14, C07F 7/08, C08C 19/44, C08F 2/38, C08K 3/04, C08K 3/36, C08L 13/00, B60C 1/00, C08F 36/04, C08C 19/25, C08K 3/00, C08C 19/30, C08C 19/36, C08F 236/06, C08F 236/10

(54) **COLD FLOW REDUZIERTE POLYMERE MIT GUTEM VERARBEITUNGSVERHALTEN**
COLD FLOW REDUCED POLYMERS WITH GOOD PROCESSING BEHAVIOUR
POLYMÈRES RÉDUITS EN FLUAGE À FROID AYANT UN BON COMPORTEMENT DE TRAITEMENT

(30) Priorität: 24.04.2013 EP 13165215
(43) Veröffentlichungstag der Anmeldung: 02.03.2016
(73) Patentinhaber: ARLANXEO Deutschland GmbH, 41540 Dormagen (DE)
(72) Erfinder: STEINHAUSER, Norbert, 41539 Dormagen (DE); GROß, Thomas, 42489 Wülfrath (DE)
(86) Internationale Anmeldenummer: PCT/EP2014/057426
(87) Internationale Veröffentlichungsnummer: WO 2014/173707

(56) Entgegenhaltungen:
- DE-A1- 4 240 274
- JP-A- S6 210 137
- JP-A- 2008 069 274
- US-A- 4 033 731
- US-A- 4 788 313
- US-A1- 2005 009 979
- MEIJERINK J I ET AL: "The influence of siloxane modifiers on the thermal expansion coefficient of epoxy resins", POLYMER, ELSEVIER SCIENCE PUBLISHERS B.V, GB, Bd. 35, Nr. 1, 1. Januar 1994 (1994-01-01) , Seiten 179-186, XP024114940, ISSN: 0032-3861, DOI: 10.1016/0032-3861(94)90069-8 [gefunden am 1994-01-01]

## Beschreibung

Die Erfindung betrifft Cold Flow reduzierte, endgruppenfunktionalisierte Polymere mit gutem Verarbeitungsverhalten, deren Herstellung und Verwendung.

Bei Reifenlaufflächen werden als wichtige Eigenschaften eine gute Haftung auf trockener und nasser Oberfläche, ein geringer Rollwiderstand sowie ein hoher Abriebwiderstand angestrebt. Dabei ist es sehr schwer, die Rutschfestigkeit eines Reifens zu verbessern, ohne gleichzeitig den Rollwiderstand und die Abriebbeständigkeit zu verschlechtern. Ein niedriger Rollwiderstand ist für einen niedrigen Kraftstoffverbrauch von Bedeutung, und eine hohe Abriebbeständigkeit ist der entscheidende Faktor für eine hohe Laufleistung des Reifens.

Nassrutschfestigkeit und Rollwiderstand einer Reifenlauffläche hängen zum großen Teil von den dynamisch-mechanischen Eigenschaften der Kautschuke ab, die bei der Mischungsherstellung verwendet werden. Zur Erniedrigung des Rollwiderstands werden für die Reifenlauffläche Kautschuke mit einer hohen Rückprallelastizität bei höheren Temperaturen (60°C bis 100°C) eingesetzt. Andererseits sind zur Verbesserung der Nassrutschfestigkeit Kautschuke mit einem hohen Dämpfungsfaktor bei niedrigen Temperaturen (0 bis 23°C) bzw. niedriger Rückprallelastizität im Bereich 0°C bis 23°C von Vorteil. Um dieses komplexe Anforderungsprofil zu erfüllen, werden Mischungen aus verschiedenen Kautschuken in der Lauffläche eingesetzt. Für gewöhnlich werden Mischungen aus einem oder mehreren Kautschuken mit einer relativ hohen Glasübergangstemperatur, wie Styrol-Butadien-Kautschuk, und einem oder mehreren Kautschuken mit relativ niedriger Glasübergangstemperatur, wie Polybutadien mit einem hohen 1,4-cis-Gehalt bzw. einem Styrol-Butadien-Kautschuk mit niedrigem Styrol- und geringem Vinylgehalt oder einem in Lösung hergestellten Polybutadien mit mittlerem 1,4-cis- und niedrigem Vinylgehalt verwendet.

Doppelbindungshaltige anionisch polymerisierte Lösungskautschuke, wie Lösungs-Polybutadien und Lösungs-Styrol-Butadien-Kautschuke, besitzen gegenüber entsprechenden Emulsionskautschuken Vorteile bei der Herstellung rollwiderstandsarmer Reifenlaufflächen. Die Vorteile liegen unter anderem in der Steuerbarkeit des Vinylgehalts und der damit verbundenen Glasübergangstemperatur und der Molekülverzweigung. Hieraus ergeben sich in der praktischen Anwendung besondere Vorteile in der Relation von Nassrutschfestigkeit und Rollwiderstand des Reifens. Wesentliche Beiträge zur Energiedissipation und somit zum Rollwiderstand in Reifenlaufflächen resultieren aus freien Polymerkettenenden und aus dem reversiblen Auf- und Abbau des Füllstoffnetzwerks, welches der in der Reifenlaufflächenmischung eingesetzte Füllstoff (zumeist Kieselsäure und/oder Ruß) ausbildet.

Die Einführung funktioneller Gruppen an den Polymerkettenenden und/oder an den Polymerkettenanfängen ermöglicht eine physikalische oder chemische Anbindung dieser Kettenenden bzw. -anfänge an die Füllstoffoberfläche. Dadurch wird deren Beweglichkeit eingeschränkt und somit die Energiedissipation bei dynamischer Beanspruchung der Reifenlauffläche verringert. Gleichzeitig können diese funktionellen Gruppen die Dispergierung des Füllstoffes in der Reifenlauffläche verbessern, was zu einer Schwächung des Füllstoffnetzwerkes und damit zu einer weiteren Absenkung des Rollwiderstandes führen kann.

Zu diesem Zweck sind zahlreiche Methoden zur Endgruppenmodifizierung entwickelt worden. Beispielsweise werden in der JP S62 10137 engruppenfunktionalisierte Polysiloxane mit Carboxyl enthaltende Endgruppen beschrieben. DE 42 40 274 A1 beschreibt engruppenfunktionalisierte Polysiloxane mit Fluoraliphaten- und Carboxylenthaltenden Endgruppen. US 4033731 beschreibt Silalactonpolymerisate, die durch Vernetzung von linearen Silalactonpolymerisaten nach üblichen Verfahren hergestellt werden. US 2005/009979 A1 beschreibt Verfahren zum Modifizieren eines aktiven Endes eines ein aktives Ende enthaltenden konjugierten Dien- polymers mit einer Alkoxysilanverbindung, die mindestens eine funktionale Gruppe, ausgewählt aus der Gruppe bestehend aus (a) einer Epoxygruppe, (b) einer Isocyanatgruppe und (c) einer Carboxylgruppe, enthält. Weiteres Beispielsweise wird in der EP0180141A1 die Verwendung von 4,4'-Bis(dimethylamino)benzophenon oder N-Methylcaprolactam als Funktionalisierungsreagenzien beschrieben. Auch die Verwendung von Ethylenoxid und N-Vinylpyrrolidon ist aus EP0864606A1 bekannt. Eine Reihe weiterer möglicher Funktionalisierungsreagenzien sind in US4417029 aufgeführt. Methoden zur Einführung von funktionellen Gruppen an den Polymerkettenanfängen mittels funktioneller anionischer Polymerisationsinitiatoren sind zum Beispiel in EP0513217A1 und EP0675140A1 (Initiatoren mit geschützter Hydroxylgruppe), US20080308204A1 (Thioether enthaltende Initiatoren) sowie in US5792820, EP0590490A1 und EP0594107A1 (Alkaliamide von sekundären Aminen als Polymerisationsinitiatoren) beschrieben.

Die Carboxygruppe als stark polarer, zweizähniger Ligand kann besonders gut mit der Oberfläche des Silikafüllstoffes in der Kautschukmischung wechselwirken. Methoden zur Einführung von Carboxygruppen entlang der Polymerkette von in Lösung hergestellten Dienkautschuken sind bekannt und beispielsweise beschrieben in DE2653144A1, EP1000971A1, EP1050545A1, WO2009034001A1. Diese Methoden haben mehrere Nachteile, so beispielsweise dass lange Reaktionszeiten benötigt werden, dass ein nur unvollständiger Umsatz der Funktionalisierungsreagenzien erfolgt und dass eine Veränderung der Polymerketten durch Nebenreaktionen wie Verzweigung auftritt. Außerdem ermöglichen diese Methoden nicht die besonders wirkungsvolle Funktionalisierung der Polymerkettenenden.

Die Einführung von Carboxygruppen an den Kettenenden von Dienkautschuken ist ebenfalls beschrieben, so beispielsweise in US3242129 durch Umsetzung der anionischen Polymerkettenenden mit CO₂. Diese Methode hat den Nachteil, dass die Polymerlösung mit gasförmigem CO₂ in Kontakt gebracht werden muss, was sich wegen der hohen Viskosität und der dadurch bedingten schlechten Durchmischung als schwierig erweist. Zusätzlich treten schwer zu kontrollierende Kopplungsreaktionen durch Reaktion von mehr als einem Polymerkettenende am Kohlenstoffatom des CO₂ auf. Diese Kopplung kann durch sequentielle Umsetzung der carbanionischen Polymerkettenenden zuerst mit Ethylenoxid oder Propylenoxid und anschließende Reaktion der nun alkoxidischen Polymerkettenenden mit einem zyklischen Anhydrid vermieden werden (US4465809). Aber auch hier hat man den Nachteil, dass gasförmiges und zudem sehr toxisches Ethylenoxid oder Propylenoxid in die hochviskose Kautschuklösung eingebracht werden muss. Darüber hinaus bilden sich durch Reaktion der alkoxidischen Kettenenden mit dem zyklischen Anhydrid hydrolyseanfällige Esterbindungen, die bei der Aufarbeitung und beim späteren Einsatz gespalten werden können.

Insbesondere Silane und Cyclosiloxane mit in der Summe mindestens zwei Halogen- und/oder Alkoxy- und/oder Aryloxysubstituenten an Silicium eignen sich gut zur Endgruppenfunktionalisierung von Dienkautschuken, da einer der genannten Substituenten am Si-Atom leicht in einer schnellen Substitutionsreaktion durch ein anionisches Dienpolymerkettenende ausgetauscht werden kann und der bzw. die weiteren der zuvor genannten Substituenten an Si als funktionelle Gruppe zur Verfügung steht, welche, gegebenenfalls nach Hydrolyse, mit dem Füllstoff der Reifenlaufflächenmischung wechselwirken kann. Beispiele für derartige Silane finden sich in US3244664, US4185042, EP0778311A1 und US20050203251A1.

Diese Silane weisen in der Regel funktionelle Gruppen auf, die direkt an das Si-Atom gebunden sind oder über einen Spacer mit Si verbunden sind und die mit der Oberfläche des Silikafüllstoffes in der Kautschukmischung wechselwirken können. Bei diesen funktionellen Gruppen handelt es sich in der Regel um Alkoxygruppen oder Halogene direkt an Si, sowie um tertiäre Aminosubstituenten, die über einen Spacer an Si gebunden sind. Nachteile dieser Silane sind die mögliche Reaktion mehrerer anionischer Polymerkettenenden pro Silanmolekül, Abspaltung störender Komponenten und Kopplung unter Ausbildung von Si-O-Si-Bindungen bei der Aufarbeitung und Lagerung. Die Einführung von Carboxygruppen mittels dieser Silane ist nicht beschrieben.

WO2012/065908A1 beschreibt 1-Oxa-2-silacycloalkane als Funktionalisierungsreagenzien zur Einführung von Hydroxyendgruppen an Dienpolymeren. Diese 1-Oxa-2-silacycloalkane weisen die Nachteile der im vorigen Absatz beschriebenen Silane, wie Reaktion mehrerer anionischer Polymerkettenenden pro Silanmolekül, Abspaltung störender Komponenten und Kopplung unter Ausbildung von Si-O-Si-Bindungen bei der Aufarbeitung und Lagerung, nicht auf. Allerdings ermöglichen auch diese Funktionalisierungsreagenzien nicht die Einführung von Carboxygruppen an den Polymerkettenenden.

Es bestand daher die Aufgabe, carboxyterminierte Polymere bereitzustellen, die die Nachteile des Standes der Technik nicht aufweisen und es insbesondere ermöglichen, die gute Reaktivität von Silanen mit anionischen Polymerkettenenden zu nutzen.

Zur Lösung dieser Aufgabe werden endgruppenfunktionalisierte Polymere vorgeschlagen, welche am Polymerkettenende eine silanhaltige Carboxygruppe der Formel (I) 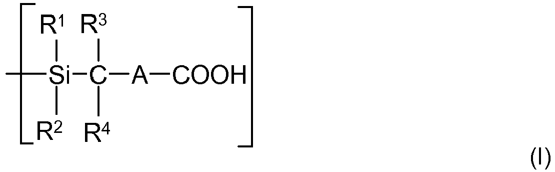 aufweisen, wobei
- R¹, R²: gleich oder verschieden sind und ein H, Alkyl-, Alkoxy-, Cycloalkyl-, Cycloalkoxy-, Aryl-, Aryloxy-, Alkaryl-, Alkaryloxy-, Aralkyl- oder Aralkoxyreste darstellen, die ein oder mehrere Heteroatome, bevorzugt O, N, S, oder Si enthalten können,
- R³, R⁴: gleich oder verschieden sind und ein H, Alkyl-, Cycloalkyl-, Aryl-, Alkaryl- oder Aralkylreste darstellen, die ein oder mehrere Heteroatome, bevorzugt O, N, S oder Si enthalten können,
- A: für einen divalenten organischen Rest steht, der neben C und H ein oder mehrere Heteroatome, bevorzugt O, N, S oder Si enthalten kann,
wobei es sich bei den Polymeren um Dienpolymere handelt.

Bevorzugt können die erfindungsgemäßen endgruppenfunktionalisierten Dienpolymere als Carboxylate vorliegen mit Endgruppen der Formel (II): 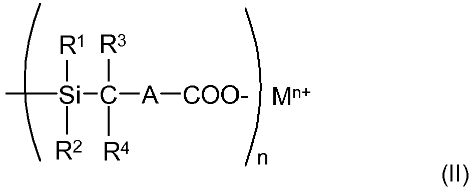 wobei
- R¹, R²: gleich oder verschieden sind und ein H, Alkyl-, Alkoxy-, Cycloalkyl-, Cycloalkoxy-, Aryl-, Aryloxy-, Alkaryl-, Alkaryloxy-, Aralkyl- oder Aralkoxyreste darstellen, die ein oder mehrere Heteroatome, bevorzugt O, N, S oder Si enthalten können,
- R³, R⁴: gleich oder verschieden sind und ein H, Alkyl-, Cycloalkyl-, Aryl-, Alkaryl- oder Aralkylreste darstellen, die ein oder mehrere Heteroatome, bevorzugt O, N, S oder Si enthalten können,
- A: für einen divalenten organischen Rest steht, der neben C und H ein oder mehrere Heteroatome, bevorzugt O, N, S oder Si enthalten kann,
- n: eine ganze Zahl von 1 bis 4 ist,
- M: ein Metall oder Halbmetall der Wertigkeit 1 bis 4 ist, vorzugsweise Li, Na, K, Mg, Ca, Zn, Fe, Co, Ni, Al, Nd, Ti, Sn, Si, Zr, V, Mo, W.

Polymere zur Herstellung der erfindungsgemäßen endgruppenfunktionalisierten Polymere sind Dienpolymere und durch Copolymerisation von Dienen mit vinylaromatischen Monomeren erhältliche Dien-Copolymere.

Als Diene sind 1,3-Butadien, Isopren, 1,3-Pentadien, 2,3-Dimethylbutadien, 1-Phenyl-1,3-butadien und/oder 1,3-Hexadien bevorzugt. Besonders bevorzugt werden 1,3-Butadien und/oder Isopren eingesetzt.

Als vinylaromatische Comonomere können z. B. Styrol, o-, m- und/oder p-Methylstyrol, p-*tert*-Butylstyrol, α-Methylstyrol, Vinylnaphthalin, Divinylbenzol, Trivinylbenzol und/oder Divinylnaphthalin verwendet werden. Besonders bevorzugt wird Styrol eingesetzt.

Die Herstellung dieser Polymere erfolgt bevorzugt durch anionische Lösungspolymerisation oder durch Polymerisation mittels Koordinationskatalysatoren. Unter Koordinationskatalysatoren sind in diesem Zusammenhang Ziegler-Natta-Katalysatoren oder monometallische Katalysatorsysteme zu verstehen. Bevorzugte Koordinationskatalysatoren sind solche auf Basis Ni, Co, Ti, Zr, Nd, V, Cr, Mo, W oder Fe. Initiatoren für die anionische Lösungspolymerisation sind solche auf Alkali- oder Erdalkalimetallbasis, wie beispielsweise Methyllithium, Ethyllithium, Isopropyllithium, *n*-Butyllithium, *sec*-Butyllithium, Pentyllithium, *n*-Hexyllithium, Cyclohexyllithium, Octyllithium, Decyllithium, 2-(6-Lithio-*n*-hexoxy)tetrahydropyran, 3-(*tert*-Butyldimethylsiloxy)-1-propyllithium, Phenyllithium, 4-Butylphenyllithium, 1-Naphthyllithium, p-Toluyllithium sowie Allyllithium-Verbindungen, abgeleitet von tertiären N-Allylaminen, wie [1-(Dimethylamino)-2-propenyl]lithium, [1-[Bis(phenylmethyl)amino]-2-propenyl]lithium, [1-(Diphenylamino)-2-propenyl]lithium, [1-(1-pyrrolidinyl)-2-propenyl]lithium, Lithiumamide sekundärer Amine wie Lithiumpyrrolidid, Lithiumpiperidid, Lithiumhexamethylenimid, Lithium-1-methylimidazolidid, Lithium-1-methylpiperazid, Lithiummorpholid, Lithiumdicyclohexylamid, Lithiumdibenzylamid, Lithiumdiphenylamid. Diese Allyllithiumverbindungen und diese Lithiumamide können auch *in situ* durch Reaktion einer Organolithiumverbindung mit den jeweiligen tertiären N-Allylaminen bzw. mit den jeweiligen sekundären Aminen hergestellt werden. Des Weiteren können auch di- und polyfunktionelle Organolithiumverbindungen eingesetzt werden, wie beispielsweise 1,4-Dilithiobutan, Dilithiumpiperazid. Bevorzugt werden n-Butyllithium und *sec*-Butyllithium eingesetzt.

Zusätzlich können die bekannten Randomizer und Kontrollagenzien für die Mikrostruktur des Polymers verwendet werden, wie beispielsweise Diethylether, Di-*n*-propylether, Diisopropylether, Di-*n*-butylether, Ethylenglykoldimethylether, Ethylenglykoldiethylether, Ethylengykoldi-*n*-butylether, Ethylengykoldi-*tert*-butylether, Diethylenglykoldimethylether, Diethylenglykoldiethylether, Diethylenglykoldi-*n*-butylether, Diethylenglykoldi-*tert-*butylether, 2-(2-Ethoxyethoxy)-2-methylpropan, Triethylenglykoldimethylether, Tetrahydrofuran, Ethyltetrahydrofurfurylether, Hexyltetrahydrofurfurylether, 2,2-Bis(2-tetrahydrofuryl)propan, Dioxan, Trimethylamin, Triethylamin, N,N,N',N'-Tetramethylethylendiamin, N-Methylmorpholin, N-Ethylmorpholin, 1,2-Dipiperidinoethan, 1,2-Dipyrrolidinoethan, 1,2-Dimorpholinoethan sowie Kalium- und Natriumsalze von Alkoholen, Phenolen, Carbonsäuren, Sulfonsäuren.

Derartige Lösungspolymerisationen sind bekannt und beispielsweise in I. Franta, Elastomers and Rubber Compounding Materials; Elsevier 1989, Seite 113 - 131, in Houben-Weyl, Methoden der Organischen Chemie, Thieme Verlag, Stuttgart, 1961, Band XIV/1 Seiten 645 bis 673 oder im Band E 20 (1987), Seiten 114 bis 134 und Seiten 134 bis 153 sowie in Comprehensive Polymer Science, Vol. 4, Part II (Pergamon Press Ltd., Oxford 1989), Seiten 53-108 beschrieben.

Die Herstellung der bevorzugten Dienhomo- und Diencopolymere findet vorzugsweise in einem Lösungsmittel statt. Als Lösungsmittel für die Polymerisation werden vorzugsweise inerte aprotische Lösungsmittel, wie beispielsweise paraffinische Kohlenwasserstoffe, wie isomere Butane, Pentane, Hexane, Heptane, Octane, Decane, Cyclopentan, Methylcyclopentan, Cyclohexan, Methylcyclohexan, Ethylcyclohexan oder 1,4-Dimethylcyclohexan oder Alkene wie 1-Buten oder aromatische Kohlenwasserstoffe, wie Benzol, Toluol, Ethylbenzol, Xylol, Diethylbenzol oder Propylbenzol eingesetzt. Diese Lösungsmittel können einzeln oder in Kombination verwendet werden. Bevorzugt sind Cyclohexan, Methylcyclopentan und n-Hexan. Ebenfalls möglich ist die Abmischung mit polaren Lösungsmitteln.

Die Menge an Lösungsmittel liegt bei dem erfindungsgemäßen Verfahren üblicherweise im Bereich von 100 bis 1000 g, bevorzugt im Bereich von 200 bis 700 g, bezogen auf 100 g der gesamten Menge an eingesetztem Monomer. Es ist aber auch möglich, die eingesetzten Monomere in Abwesenheit von Lösungsmitteln zu polymerisieren.

Die Polymerisation kann in der Weise durchgeführt werden, dass zuerst die Monomere und das Lösungsmittel vorgelegt werden und dann die Polymerisation durch Zugabe des Initiators oder Katalysators gestartet wird. Es ist auch möglich in einem Zulaufverfahren zu polymerisieren, bei dem der Polymerisationsreaktor durch Zugabe von Monomeren und Lösungsmittel befüllt wird, wobei der Initiator oder Katalysator vorgelegt wird oder mit den Monomeren und dem Lösungsmittel zugegeben wird. Variationen, wie Vorlegen des Lösungsmittels im Reaktor, Zugabe des Initiators oder Katalysators und dann Zugabe der Monomere sind möglich. Weiterhin kann die Polymerisation in einer kontinuierlichen Fahrweise betrieben werden. Weitere Monomer- und Lösungsmittelzugabe während oder am Ende der Polymerisation ist in allen Fällen möglich.

Die Polymerisationszeit kann in breiten Bereichen von einigen Minuten bis zu einigen Stunden schwanken. Üblicherweise wird die Polymerisation innerhalb einer Zeitspanne von 10 Minuten bis zu 8 Stunden, bevorzugt 20 Minuten bis 4 Stunden, durchgeführt. Sie kann sowohl bei Normaldruck als auch bei erhöhtem Druck (von 1 bis 10 bar) durchgeführt werden.

Es wurde überraschend festgestellt, dass durch die Verwendung von einem oder mehreren Silalactonen als Funktionalisierungsreagenzien carboxyterminierte Polymere hergestellt werden können, welche die Nachteile des Standes der Technik nicht aufweisen.

Bei den Silalactonen handelt es sich um Verbindungen der Formel (III) 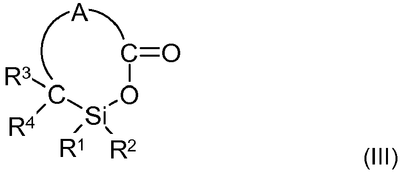 wobei
- R¹, R²: gleich oder verschieden sind und ein H, Alkyl-, Alkoxy-, Cycloalkyl-, Cycloalkoxy-, Aryl-, Aryloxy-, Alkaryl-, Alkaryloxy-, Aralkyl- oder Aralkoxyreste darstellen, die ein oder mehrere Heteroatome, bevorzugt O, N, S oder Si enthalten können,
- R³, R⁴: gleich oder verschieden sind und ein H, Alkyl-, Cycloalkyl-, Aryl-, Alkaryl- oder Aralkylreste darstellen, die ein oder mehrere Heteroatome, bevorzugt O, N, S oder Si enthalten können,
- A: für einen divalenten organischen Rest steht, der neben C und H ein oder mehrere Heteroatome, bevorzugt O, N, S oder Si enthalten kann.
wobei bevorzugt,
- R¹, R²: gleich oder verschieden sind und ein H, (C₁-C₂₄)-Alkyl-, (C₁-C₂₄)-Alkoxy-, (C₃-C₂₄)-Cycloalkyl-, (C₃-C₂₄)-Cycloalkoxy-, (C₆-C₂₄)-Aryl-, (C₆-C₂₄)-Aryloxy-, (C₆-C₂₄)-Alkaryl-, (C₆-C₂₄)-Alkaryloxy-, (C₆-C₂₄)-Aralkyl- oder (C₆-C₂₄)-Aralkoxyreste darstellen, die ein oder mehrere Heteroatome, bevorzugt O, N, S oder Si enthalten können, und
- R³, R⁴: gleich oder verschieden sind und ein H, (C₁-C₂₄)-Alkyl-, (C₃-C₂₄)-Cycloalkyl-, (C₆-C₂₄)-Aryl-, (C₆-C₂₄)-Alkaryl- oder (C₆-C₂₄)-Aralkylreste darstellen, die ein oder mehrere Heteroatome, bevorzugt O, N, S oder Si enthalten können.

### Beispiele für Verbindungen der Formel (III) sind:

2,2-Dimethyl-1-oxa-2-silacyclohexan-6-on (1), 2,2,4-Trimethyl-1-oxa-2-silacyclohexan-6-on (2), 2,2,5-Trimethyl-1-oxa-2-silacyclohexan-6-on (3), 2,2,4,5-Tetramethyl-1-oxa-2-silacyclohexan-6-on (4), 2,2-Diethyl-1-oxa-2-silacyclohexan-6-on (5), 2,2-Diethoxy-1-oxa-2-silacyclohexan-6-on (6), 2,2-Dimethyl-1,4-dioxa-2-silacyclohexan-6-on (7), 2,2,5-Trimethyl-1,4-dioxa-2-silacyclohexan-6-on (8), 2,2,3,3-Tetramethyl-1,4-dioxa-2-silacyclohexan-6-on (9), 2,2-Dimethyl-1-oxa-4-thia-2-silacyclohexan-6-on (10), 2,2-Diethyl-1-oxa-4-thia-2-silacyclohexan-6-on (11), 2,2-Diphenyl-1-oxa-4-thia-2-silacyclohexan-6-on (12), 2-Metyl-2-ethenyl-1-oxa-4-thia-2-silacyclohexan-6-on (13), 2,2,5-Trimethyl-1oxa-4-thia-2-silacyclohexan-6-on (14), 2,2-Dimethyl-1-oxa-4-aza-2-silacyclohexan-6-on (15), 2,2,4-Trimethyl-1-oxa-4-aza-2-silacyclohexan-6-on (16), 2,4-Dimethyl-2-phenyl-1-oxa-4-aza-2-silacyclohexan-6-on (17), 2,2-Dimethyl-4-trimethylsilyl-1-oxa-4-aza-2-silacyclohexan-6-on (18), 2,2-Diethoxy-4-methyl-1-oxa-4-aza-2-silacyclohexan-6-on (19), 2,2,4,4-Tetramethyl-1-oxa-2,4-disilacyclohexan-6-on (20), 3,4-Dihydro-3,3-dimethyl-1*H*-2,3-benzoxasilin-1-on (21), 2,2-Dimethyl-1-oxa-2-silacyclopentan-5-on (22), 2,2,3-Trimethyl-1-oxa-2-silacyclopentan-5-on (23), 2,2-Dimethyl-4-phenyl-1-oxa-2-silacyclopentan-5-on (24), 2,2-Di(*tert*-butyl)-1-oxa-2-silacyclopentan-5-on (25), 2-methyl-2-(2-propen-1-yl)-1-oxa-2-silacyclopentan-5-on (26), 1,1-Dimethyl-2,1-benzoxasilol-3(1*H*)-on (27), 2,2-Dimethyl-1-oxa-2-silacycloheptan-7-on (28).

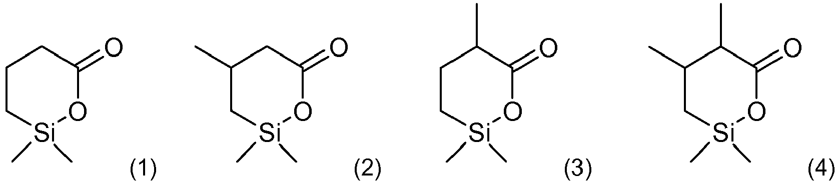

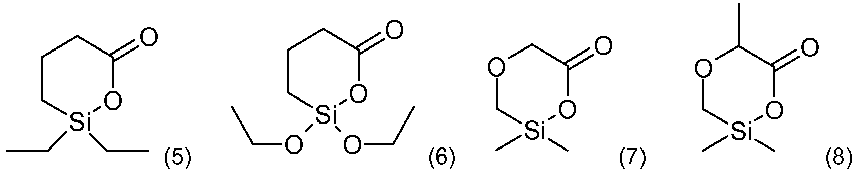

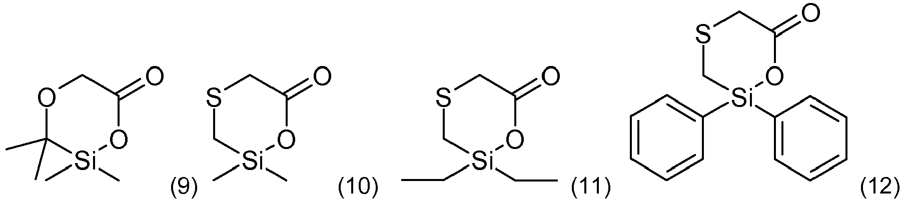

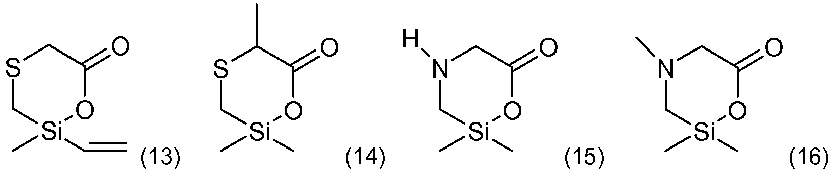

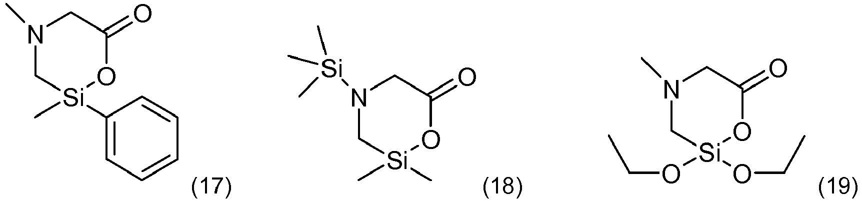

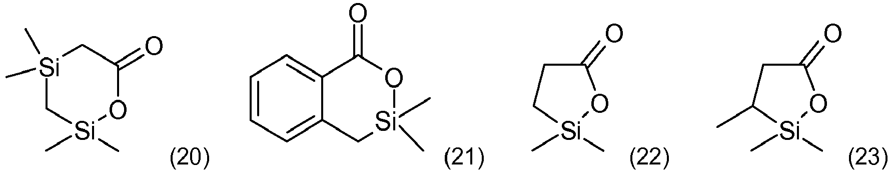

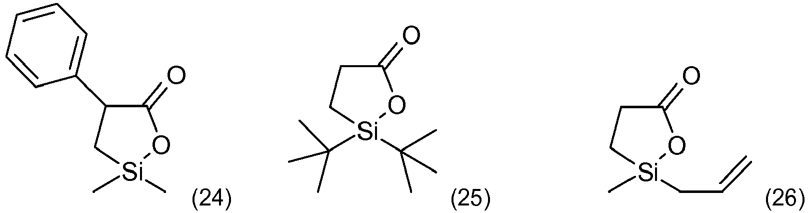

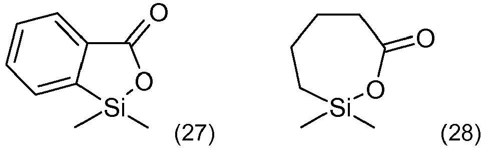

Die Synthesen derartiger Silalactone sind beispielsweise beschrieben in US 2,635,109; M. Wieber, M. Schmidt, Chemische Berichte 1963, 96 (10), 2822-5; J.M. Wolcott, F.K. Cartledge, Journal of Organic Chemistry 1974, 39 (16), 2420-4; M.P. Sibi, J.W. Christensen, Tetrahedron Letters 1995, 36 (35), 6213-6; T. Linker, M. Maurer, F. Rebien, Tetrahedron Letters 1996, 37 (46), 8363-6; M. Shindo et al., Angewandte Chemie, International Edition 2004, 43 (1), 104-6.

Es wurde festgestellt, dass die erfindungsgemäßen endgruppenfunktionalisierten Polymere durch Reaktion von reaktiven Polymerkettenenden mit Silalactonen und gegebenenfalls nachfolgender Protonierung der dabei hergestellten Carboxylat-Endgruppe zur Carboxy-Endgruppe hergestellt werden können.

Somit ist auch die Verwendung von Silalactonen als Funktionalisierungsreagenzien zur Herstellung der erfindungsgemäßen endgruppenfunktionalisierten Polymere mit Endgruppen der Formel (I) oder (II) Gegenstand der Erfindung.

Bei Umsetzung von Polymeren, die sehr reaktive nucleophile Polymerkettenenden aufweisen mit Silalactonen der Formel (III) kann die Anbindung der Polymerketten nicht nur am Si-Atom des Funktionalisierungsreagenzes erfolgen, sondern es kann zusätzlich eine Anbindung am Carbonyl-C-Atom auftreten. Dies führt zu einer linearen Kopplung der Polymerketten die keine funktionellen Endgruppen nach Formel (I) oder (II) aufweisen. Diese Kopplungsprodukte werden im Rahmen der Anmeldung als "Dimere" bezeichnet. Ein Beispiel einer linearen Kopplung der Polymerketten ist in Schema 1 dargestellt, wobei in Abhängigkeit von der Ringöffnung des Silalactones auch weitere Dimere entstehen können. Allen entstehenden Dimeren ist gemein, dass sie ein oder mehrere Strukturelemente, abgeleitet von Silalactonen der Formel (III) aufweisen, bevorzugt ein Strukturelement der Formel (IV).

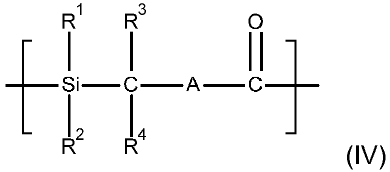

Bei Herstellung der Polymere entsteht bei Zugabe des Funktionalisierungsreagenzes eine Polymermischung, enthaltend endgruppenfunktionalisiertes Polymer und Dimer, enthaltend ein oder mehrere Strukturelemente abgeleitet von Silalactonen der Formel (III). Polymere mit sehr reaktiven nucleophilen Polymerkettenenden sind beispielsweise Dienhomo- und Diencopolymere, die mittels anionischer Polymerisation oder mit Koordinationskatalysatoren hergestellt werden.

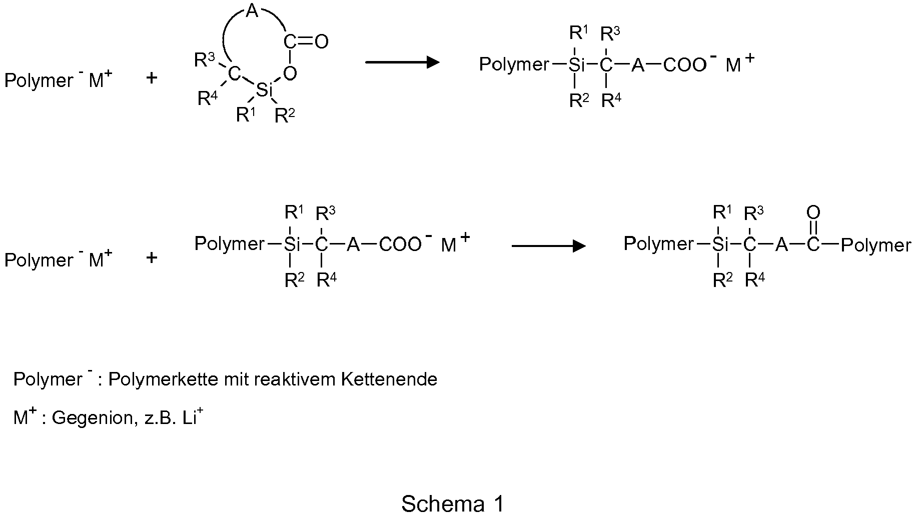

Der Gehalt an Dimer in der Polymermischung liegt üblicherweise im Bereich von 10 bis 90 Gew.-%, bezogen auf den Gesamtgehalt an Polymer. Derartige Kopplungsreaktionen können in manchen Fällen erwünscht sein, um die Polydispersität zu erhöhen und auf diese Weise rheologische Eigenschaften der Polymermischungen wie Mooney-Viskosität, Cold Flow und Verarbeitungsverhalten zu beeinflussen.

Die erfindungsgemäßen Polymermischungen weisen vorzugsweise mittlere Molgewichte (Zahlenmittel, Mₙ) von 10.000 bis 2.000.000 g/mol, bevorzugt von 100.000 bis 1.000.000 g/mol und Glasübergangstemperaturen von -110°C bis +20°C, bevorzugt von -110°C bis 0°C, sowie Mooney-Viskositäten [ML 1+4 (100°C)] von 10 bis 200, vorzugsweise von 30 bis 150 Mooney-Einheiten auf.

Ein weiterer Gegenstand der Erfindung ist ein Verfahren zur Herstellung der erfindungsgemäßen endgruppenfunktionalisierten Polymere, wonach ein oder mehrere Verbindungen der Formel (III), als Reinstoff, Lösung oder Suspension, zu Polymeren mit reaktiven Polymerkettenenden gegeben werden. Die Zugabe erfolgt bevorzugt nach Abschluss der Polymerisation; sie kann aber auch vor vollständigem Monomerumsatz erfolgen. Die Reaktion von Silalactonen der Formel (III) mit Polymeren mit reaktiven Polymerkettenenden erfolgt bei den üblicherweise für die Polymerisation verwendeten Temperaturen. Die Reaktionszeiten für die Umsetzung von Silalactonen der Formel (III) mit den reaktiven Polymerkettenenden kann zwischen einigen Minuten bis mehreren Stunden liegen.

Die Menge dieser Verbindungen kann so gewählt werden, dass alle reaktiven Polymerkettenenden mit Silalactonen der Formel (III) reagieren, oder es kann ein Unterschuss dieser Verbindungen eingesetzt werden. Die eingesetzten Mengen der Verbindungen der Formel (III) können einen weiten Bereich abdecken. Die bevorzugten Mengen liegen in einem Bereich von 0,005 bis 2 Gew.-%, besonders bevorzugt in einem Bereich von 0,01 bis 1 Gew.-%, bezogen auf die Menge an Polymer.

Zusätzlich zu Silalactonen der Formel (III) können auch die für die anionische Dienpolymerisation typischen Kopplungsreagenzien zur Reaktion mit den reaktiven Polymerkettenenden eingesetzt werden. Beispiele für solche Kopplungsreagenzien sind Siliciumtetrachlorid, Methyltrichlorsilan, Dimethyldichlorsilan, Zinntetrachlorid, Dibutylzinndichlorid, Tetraalkoxysilane, Ethylenglykoldiglycidylether, 1,2,4-Tris(chlormethyl)benzol. Solche Kopplungsreagenzien können vor den Silalactonen der Formel (III) zugesetzt werden, zusammen mit diesen oder nach diesen.

Nach erfolgter Zugabe von Silalactonen der Formel (III) und gegebenenfalls von Kopplungsreagenzien werden vor oder während der Aufarbeitung der erfindungsgemäßen silanhaltigen carboxylatterminierten Polymere bevorzugt die üblichen Alterungsschutzmittel, wie sterisch gehinderte Phenole, aromatische Amine, Phosphite, Thioether, zugesetzt. Weiterhin können die üblichen, für Dienkautschuke verwendeten Strecköle, wie DAE (Distillate Aromatic Extract)-, TDAE (Treated Distillate Aromatic Extract)-, MES (Mild Extraction Solvates)-, RAE (Residual Aromatic Extract)-, TRAE (Treated Residual Aromatic Extract)-, naphthenische und schwere naphthenische Öle zugegeben werden. Auch die Zugabe von Füllstoffen, wie Ruß und Kieselsäure, Kautschuken und Kautschukhilfsmitteln ist möglich.

Die Entfernung des Lösungsmittels aus dem Polymerisationsprozess kann nach den üblichen Verfahren, wie Destillation, Strippen mit Wasserdampf oder Anlegen eines Vakuums, gegebenenfalls bei höherer Temperatur, erfolgen.

Ein weiterer Erfindungsgegenstand ist die Verwendung der erfindungsgemäßen endgruppenfunktionalisierten Polymere zur Herstellung von vulkanisierbaren Kautschukzusammensetzungen.

Vorzugsweise weisen diese vulkanisierbaren Kautschukzusammensetzungen weitere Kautschuke, Füllstoffe, Kautschukchemikalien, Verarbeitungshilfsmittel und Strecköle auf.

Zusätzliche Kautschuke sind beispielsweise Naturkautschuk sowie Synthesekautschuke. Sofern vorhanden, liegt deren Menge üblicherweise im Bereich von 0,5 bis 95 Gew.-%, bevorzugt im Bereich von 10 bis 80 Gew.-%, bezogen auf die gesamte Polymermenge in der Mischung. Die Menge an zusätzlich zugegebenen Kautschuken richtet sich wieder nach dem jeweiligen Verwendungszweck der erfindungsgemäßen Mischungen. Beispiele für solche Syntheskautschuke sind BR (Polybutadien), Acrylsäure-Alkylester-Copolymere, IR (Polyisopren), E-SBR (Styrol-Butadien-Copolymerisate hergestellt durch Emulsionspolymerisation), S-SBR (Styrol-Butadien-Copolymerisate hergestellt durch Lösungspolymerisation), IIR (Isobutylen-Isopren-Copolymerisate), NBR (Butadien-Acrylnitril-Copolymere), HNBR (teilhydrierter oder vollständig hydrierter NBR-Kautschuk), EPDM (Ethylen-Propylen-Dien-Terpolymerisate) sowie Mischungen dieser Kautschuke. Für die Herstellung von Kfz-Reifen sind insbesondere Naturkautschuk, E-SBR sowie S-SBR mit einer Glastemperatur oberhalb von -60°C, Polybutadienkautschuk mit hohem cis-Gehalt (> 90 %), der mit Katalysatoren auf Basis Ni, Co, Ti oder Nd hergestellt wurde, sowie Polybutadienkautschuk mit einem Vinylgehalt von bis zu 80 % sowie deren Mischungen von Interesse.

Als Füllstoffe kommen für die erfindungsgemäßen Kautschukzusammensetzungen alle bekannten in der Kautschukindustrie verwendeten Füllstoffe in Betracht. Diese umfassen sowohl aktive als auch inaktive Füllstoffe.

Zu erwähnen sind beispielhaft:
- hochdisperse Kieselsäuren, hergestellt beispielsweise durch Fällung von Lösungen von Silikaten oder Flammenhydrolyse von Siliciumhalogeniden mit spezifischen Oberflächen von 5-1.000, vorzugsweise 20-400 m²/g (BET-Oberfläche) und mit Primärteilchengrößen von 10-400 nm. Die Kieselsäuren können gegebenenfalls auch als Mischoxide mit anderen Metalloxiden, wie AI-, Mg-, Ca-, Ba-, Zn-, Zr-, Ti-Oxiden vorliegen;
- synthetische Silikate, wie Aluminiumsilikat, Erdalkalisilikat wie Magnesiumsilikat oder Calciumsilikat, mit BET-Oberflächen von 20-400 m²/g und Primärteilchendurchmessern von 10-400 nm;
- natürliche Silikate, wie Kaolin, Montmorillonit und andere natürlich vorkommende Kieselsäuren;
- Glasfasern und Glasfaserprodukte (Matten, Stränge) oder Mikroglaskugeln;
- Metalloxide, wie Zinkoxid, Calciumoxid, Magnesiumoxid, Aluminiumoxid;
- Metallcarbonate, wie Magnesiumcarbonat, Calciumcarbonat, Zinkcarbonat;
- Metallhydroxide, wie beispielsweise Aluminiumhydroxid, Magnesiumhydroxid;
- Metallsulfate, wie Calciumsulfat, Bariumsulfat;
- Ruße: Die hierbei zu verwendenden Ruße sind nach dem Flammruß-, dem Channel-, Furnace-, Gasruß-, Thermal-, Acetylenruß- oder Lichtbogenverfahren hergestellte Ruße und besitzen BET-Oberflächen von 9 - 200 m²/g, beispielsweise SAF-, ISAF-LS-, ISAF-HM-, ISAF-LM-, ISAF-HS-, CF-, SCF-, HAF-LS-, HAF-, HAF-HS-, FF-HS-, SPF-, XCF-, FEF-LS-, FEF-, FEF-HS-, GPF-HS-, GPF-, APF-, SRF-LS-, SRF-LM-, SRF-HS-, SRF-HM- und MT-Ruße bzw. nach ASTM N 110-, N219-, N220-, N231-, N 234-, N 242-, N 294-, N 326-, N 327-, N 330-, N 332-, N 339-, N 347-, N351-, N 356-, N 358-, N 375-, N 472-, N 539-, N 550-, N 568-, N 650-, N 660-, N754-, N 762-, N 765-, N 774-, N787- und N 990-Ruße.
- Kautschukgele, insbesondere solche auf Basis von BR, E-SBR und/oder Polychloropren mit Teilchengrößen von 5 bis 1.000 nm.

Bevorzugt werden als Füllstoffe hochdisperse Kieselsäuren und/oder Ruße eingesetzt.

Die genannten Füllstoffe können alleine oder im Gemisch eingesetzt werden. In einer besonders bevorzugten Ausführungsform enthalten die Kautschukzusammensetzungen als Füllstoffe ein Gemisch aus hellen Füllstoffen, wie hochdispersen Kieselsäuren, und Rußen, wobei das Mischungsverhältnis von hellen Füllstoffen zu Rußen bei 0,01:1 bis 50:1 bevorzugt 0,05:1 bis 20:1 liegt.

Die Füllstoffe werden hierbei in Mengen im Bereich von 10 bis 500 Gew.-Teile bezogen auf 100 Gew.-Teile Kautschuk eingesetzt. Bevorzugt werden Mengen in einem Bereich von 20 bis 200 Gew.-Teile eingesetzt.

In einer weiteren Ausführungsform der Erfindung enthalten die Kautschukzusammensetzungen noch Kautschukhilfsmittel, die beispielsweise die Verarbeitungseigenschaften der Kautschukzusammensetzungen verbessern, der Vernetzung der Kautschukzusammensetzungen dienen, die physikalischen Eigenschaften der aus den erfindungsgemäßen Kautschukzusammensetzungen hergestellten Vulkanisate für deren speziellen Einsatzzweck verbessern, die Wechselwirkung zwischen Kautschuk und Füllstoff verbessern oder zur Anbindung des Kautschuks an den Füllstoff dienen.

Kautschukhilfsmittel sind beispielsweise Vernetzeragentien, wie beispielsweise Schwefel oder Schwefel liefernde Verbindungen, sowie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Silane, Verzögerer, Metalloxide, Strecköle, wie beispielsweise DAE (Distillate Aromatic Extract)-, TDAE (Treated Distillate Aromatic Extract)-, MES (Mild Extraction Solvates)-, RAE (Residual Aromatic Extract)-, TRAE (Treated Residual Aromatic Extract)-, naphthenische und schwere naphthenische Öle sowie Aktivatoren.

Die gesamte Menge an Kautschukhilfsmitteln liegt im Bereich von 1 bis 300 Gewichtsteilen, bezogen auf 100 Gewichtsteile an Gesamtkautschuk. Bevorzugt werden Mengen im Bereich von 5 bis 150 Gewichtsteile an Kautschukhilfsmitteln eingesetzt.

Die Herstellung der vulkanisierbaren Kautschukzusammensetzungen kann in einem einstufigen oder in einem mehrstufigen Verfahren erfolgen, wobei 2 bis 3 Mischstufen bevorzugt sind. So kann beispielsweise die Zugabe von Schwefel und Beschleuniger in einer separaten Mischstufe beispielsweise auf einer Walze erfolgen, wobei Temperaturen im Bereich von 30 bis 90°C bevorzugt sind. Bevorzugt erfolgt die Zugabe von Schwefel und Beschleuniger in der letzten Mischstufe.

Für die Herstellung der vulkanisierbaren Kautschukzusammensetzungen geeignete Aggregate sind beispielsweise Walzen, Kneter, Innenmischer oder Mischextruder.

Somit sind vulkanisierbare Kautschukzusammensetzungen enthaltend endgruppenfunktionalisierte Polymere mit Endgruppen der Formel (I) oder (II) ein weiterer Gegenstand der Erfindung.

Die erfindungsgemäßen Polymere bzw. deren Kautschukmischungen kombinieren niedrigen Cold Flow, gute dynamische Eigenschaften und gutes Verarbeitungsverhalten.

Ein weiterer Gegenstand der Erfindung ist die Verwendung der erfindungsgemäßen vulkanisierbaren Kautschukzusammensetzungen zur Herstellung von Kautschukvulkanisaten, insbesondere für die Herstellung von Reifen, insbesondere Reifenlaufflächen, die einen besonders geringen Rollwiderstand bei hoher Nassrutschfestigkeit und Abriebbeständigkeit aufweisen.

Die erfindungsgemäßen vulkanisierbaren Kautschukzusammensetzungen eignen sich auch zur Herstellung von Formkörpern, beispielsweise für die Herstellung von Kabelmänteln, Schläuchen, Treibriemen, Förderbändern, Walzenbelägen, Schuhsohlen, Dichtungsringen und Dämpfungselementen.

Die nachfolgenden Beispiele dienen der Erläuterung der Erfindung, ohne dabei limitierend zu wirken.

### Beispiele

### Beispiel 1a: Synthese von nicht funktionalisiertem Styrol-Butadien-Copolymer (Vergleichsbeispiel)

Ein inertisierter 20L-Reaktor wurde mit 8,5 kg Hexan, 1185 g 1,3-Butadien, 315 g Styrol, 8,6 mmol 2,2-Bis(2-tetrahydrofuryl)propan sowie 11,3 mmol Butyllithium befüllt und der Inhalt auf 60°C erwärmt. Es wurde unter Rühren 25 Minuten bei 60°C polymerisiert. Anschließend wurden 11,3 mmol Cetylalkohol zum Abstoppen der anionischen Polymerkettenenden zugesetzt, die Kautschuklösung abgelassen, durch Zugabe von 3 g Irganox® 1520 (2,4-Bis(octylthiomethyl)-6-methylphenol) stabilisiert und das Lösungsmittel durch Strippen mit Wasserdampf entfernt. Die Kautschukkrümel wurden bei 65°C im Vakuum getrocknet.

### Beispiel 1b: Synthese von carboxvterminiertem Styrol-Butadien-Copolymer durch Umsetzung mit Silalacton (erfindungsgemäß)

Es wurde wie in Beispiel 1a verfahren. An Stelle des Cetylalkohols wurde jedoch eine zu Butyllithium äquimolare Menge an 2,2-Dimethyl-1-oxa-4-thia-2-silacyclohexan-6-on (als Lösung in Toluol) zugegeben und der Reaktorinhalt anschließend für weitere 20 Minuten auf 60°C erwärmt.

### Beispiel 1c: Synthese von carboxyterminiertem Styrol-Butadien-Copolymer mit tertiärer Aminogruppe am Kettenanfang durch Umsetzung mit Silalacton (erfindungsgemäß)

Es wurde wie in Beispiel 1b verfahren. Vor Zugabe des Butyllithiums wurde jedoch eine zu Butyllithium äquimolare Menge an Pyrrolidin zugegeben.

### Beispiel 1d: Synthese von hvdroxvterminiertem Stvrol-Butadien-Copolvmer durch Umsetzung mit Caprolacton (Vergleichsbeispiel)

Es wurde wie in Beispiel 1b verfahren. An Stelle des Silalactons wurde jedoch eine zu Butyllithium äquimolare Menge an ε-Caprolacton zugegeben.

### Beispiel 1e: Synthese von hydroxyterminiertem Styrol-Butadien-Copolymer durch Umsetzung mit 1-Oxa-2-silacycloalkan (Vergleichsbeispiel)

Es wurde wie in Beispiel 1b verfahren. An Stelle des Silalactons wurde jedoch eine zu Butyllithium äquimolare Menge an 2,2,4-Trimethyl-1-oxa-4-aza-2-silacyclohexan (als Lösung in Hexan) zugegeben.

Die Polymereigenschaften der Styrol-Butadien-Copolymere aus den Beispielen 1a-e sind in Tabelle 1 zusammengefasst.

### Beispiele 2a-e: Kautschukzusammensetzunaen

Es wurden Reifenlaufflächenkautschukzusammensetzungen hergestellt, die die Styrol-Butadien-Copolymere der Beispiele 1a-e enthalten. Die Bestandteile sind in Tabelle 2 aufgelistet. Die Kautschukzusammensetzungen (ohne Schwefel und Beschleuniger) wurden in einem 1,5-L Kneter hergestellt. Die Bestandteile Schwefel und Beschleuniger wurden anschließend auf einer Walze bei 40°C zugemischt.

### Beispiel 3a-e: Extrusionsprofile

Zur Beurteilung des Verarbeitungsverhaltens der Kautschukzusammensetzungen der Beispiele 2a-e wurden mittels eines Laborextruders bei 120°C Extrusionsprofile (Garvey-Profile) erstellt (Brabender-Extruder PV 301 (16 mm), Düsendurchmesser 14,5 mm, Mundstück S08, Schneckendrehzahl 50 Umdrehungen pro Minute). Diese Garvey-Profile sind im Anhang, Abbildungen l/3a-e, dargestellt.

**Tabelle 1: Eigenschaften der Styrol-Butadien-Copolymere der Beispiele 1a-e**

| SSBR aus Bsp. | Funktionalisierungsreagenz | Vinyl-Gehalt ^{a)} [Gew.-%] | Styrol-Gehalt ^{a)} [Gew.-%] | Tg ^{b)} [°C] | M_{P}1 ^{c)} [kg/mol] | M_{P}2 ^{c)} [kg/mol] | Kopplunsgrad ^{c)} [%] | ML1+4 ^{d)} [ME] | Cold Flow ^{e)} [mg/min] |
|---|---|---|---|---|---|---|---|---|---|
| 1a (Vergleich) | - | 51,5 | 20,9 | -23 | 280 | - | 0 | 42 | 21 |
| 1b (erfindungsgemäß) | Silalacton | 50,8 | 21,8 | -23 | 298 | 620 | 44 | 84 | 2 |
| 1c (erfindungsgemäß) | Silalacton | 50,9 | 20,4 | -24 | 283 | 449 | 38 | 78 | 2 |
| 1d (Vergleich) | Caprolacton | 51,8 | 22,3 | -20 | 264 | 560 | 28 | 56 | 8 |
| 1e (Vergleich) | 1-Oxa-2-silacyclohexan | 50,9 | 21,5 | -23 | 256 | - | 0 | 37 | 25 |

| | | | | | | | | | |
|---|---|---|---|---|---|---|---|---|---|
| a) Bestimmung des Vinyl- und Styrolgehalts mittels FTIR b) Bestimmung der Glasübergangstemperatur mittels DSC c) Bestimmung der Peak-Molekulargewichte M_{P}1 und M_{P}2 sowie des Kopplungsgrades mittels GPC (PS-Kalibrierung) d) Bestimmung der Mooney-Viskosität bei 100°C e) Bestimmung des Cold Flow bei 50°C | | | | | | | | | |

**Tabelle 2: Bestandteile der Reifenlaufflächenkautschukzusammensetzungen (Angaben in phr: Gewichtsteile pro 100 Gewichtsteile Kautschuk)**

| | **Vergleichsbeispiel** | **Erfindungsgemäßes Beispiel** | **Erfindungsgemäßes Beispiel** | **Vergleichsbeispiel** | **Vergleichsbeispiel** |
|---|---|---|---|---|---|
| | **2a** | **2b** | **2c** | **2d** | **2e** |
| Styrol-Butadien-Copolymer aus Beispiel 1a | 70 | 0 | 0 | 0 | 0 |
| Styrol-Butadien-Copolymer aus Beispiel 1b | 0 | 70 | 0 | 0 | 0 |
| Styrol-Butadien-Copolymer aus Beispiel 1c | 0 | 0 | 70 | 0 | 0 |
| Styrol-Butadien-Copolymer aus Beispiel 1d | 0 | 0 | 0 | 70 | 0 |
| Styrol-Butadien-Copolymer aus Beispiel 1e | 0 | 0 | 0 | 0 | 70 |
| hoch-cis-haltiges Polybutadien (BUNA™ CB 24 der Lanxess Deutschland GmbH) | 30 | 30 | 30 | 30 | 30 |
| Kieselsäure (Ultrasil® 7000) | 90 | 90 | 90 | 90 | 90 |
| Ruß (Vulcan® J/N 375) | 7 | 7 | 7 | 7 | 7 |
| TDAE-Öl (Vivatec 500) | 36,3 | 36,3 | 36,3 | 36,3 | 36,3 |
| Verarbeitungshilfsmittel (Aflux 37) | 3 | 3 | 3 | 3 | 3 |
| Stearinsäure (Edenor C 18 98-100) | 1 | 1 | 1 | 1 | 1 |
| Alterungsschutzmittel (Vulkanox® 4020/LG der Lanxess Deutschland GmbH) | 2 | 2 | 2 | 2 | 2 |
| Alterungsschutzmittel (Vulkanox® HS/LG der Lanxess Deutschland GmbH) | 2 | 2 | 2 | 2 | 2 |
| Zinkoxid (Zinkweiß Rotsiegel) | 3 | 3 | 3 | 3 | 3 |
| Wachs (Antilux 654) | 2 | 2 | 2 | 2 | 2 |
| Silan (Si 69® von Evonik) | 7,2 | 7,2 | 7,2 | 7,2 | 7,2 |
| Diphenylguanidin (Rhenogran DPG-80) | 2,75 | 2,75 | 2,75 | 2,75 | 2,75 |
| Sulfenamid (Vulkacit® NZ/EGC der Lanxess Deutschland GmbH) | 1,6 | 1,6 | 1,6 | 1,6 | 1,6 |
| Schwefel (Mahlschwefel 90/95 Chancel) | 1,6 | 1,6 | 1,6 | 1,6 | 1,6 |
| Sulfonamid (Vulkalent® E/C) | 0,2 | 0,2 | 0,2 | 0,2 | 0,2 |

### Beispiele 4a-e: Vulkanisateiaenschaften

Die Reifenlaufflächenkautschukzusammensetzungen der Beispiele 2a-e nach Tabelle 2 wurden 20 Minuten bei 160°C vulkanisiert. Die Eigenschaften der entsprechenden Vulkanisate sind in Tabelle 3 als Beispiele 4a-e aufgeführt. Die Vulkanisateigenschaften der vulkanisierten Probe aus Vergleichsbeispiel 4a mit dem nicht funktionalisierten Styrol-Butadien-Copolymer sind mit dem Index 100 versehen. Alle Werte größer als 100 in Tabelle 3 bedeuten eine entsprechende prozentuale Verbesserung der jeweiligen Prüfeigenschaft.

**Tabelle 3: Vulkanisateigenschaften**

| | **Vergleichsbeispiel** | **Erfindungsgemäßes Beispiel** | **Erfindungsgemäßes Beispiel** | **Vergleichsbeispiel** | **Vergleichsbeispiel** |
|---|---|---|---|---|---|
| | **4a** | **4b** | **4c** | **4d** | **4e** |
| **Styrol-Butadien-Copolymer im Vulkanisat:** | | | | | |
| Styrol-Butadien-Copolymer aus Beispiel 1a | X | | | | |
| Styrol-Butadien-Copolymer aus Beispiel 1b | | X | | | |
| Styrol-Butadien-Copolymer aus Beispiel 1c | | | X | | |
| Styrol-Butadien-Copolymer aus Beispiel 1d | | | | X | |
| Styrol-Butadien-Copolymer aus Beispiel 1e | | | | | X |

| **Vulkanisat eigenschaften :** | | | | | |
|---|---|---|---|---|---|
| tan δ bei 0°C (dynamische Dämpfung bei 10 Hz) | 100 | 116 | 118 | 109 | 115 |
| tan δ bei 60°C (dynamische Dämpfung bei 10 Hz) | 100 | 113 | 131 | 109 | 117 |
| tan δ-Maximum (MTS-Amplitudensweep bei 1 Hz, 60°C) | 100 | 115 | 122 | 110 | 117 |
| ΔG* (G*@0.5% - G*@15% aus MTS-Amplitudensweep) [MPa] | 100 | 134 | 167 | 116 | 189 |
| Rückprallelastizität bei 60°C [%] | 100 | 110 | 109 | 113 | 114 |
| Abrieb (DIN 53516) [mm³] | 100 | 121 | 116 | 114 | 113 |

Der Cold-Flow-Wert von Kautschuken ist ein Maßstab für das Fließverhalten des Kautschuks während der Lagerung. Garvey-Profile von unvulkanisierten Kautschukmischungen dienen zur Beurteilung des Verarbeitungsverhaltens von Kautschukmischungen. Bei vulkanisierten Reifenlaufflächenmischungen sind die Rückprallelastizität bei 60°C, die dynamische Dämpfung tan δ bei 60°C, das tan δ-Maximum im Amplitudensweep sowie die Moduldifferenz ΔG* zwischen niedriger und hoher Dehnung im Amplitudensweep Indikatoren für den Rollwiderstand im Reifen. Die dynamische Dämpfung tanδ bei 0°C ist ein Indikator für die Nassrutschfestigkeit des Reifens. Der DIN-Abrieb ist ein Indikator für die Abriebfestigkeit der Reifenlauffläche.

Wie die Abbildungen l/3a-e verdeutlichen, zeigen alle Reifenlaufflächenkautschukzusammensetzungen 2a-e gutes Verarbeitungsverhalten (glatte Garvey-Profile 3a-e). Wie aus Tabelle 1 ersichtlich, zeichnen sich jedoch nur die erfindungsgemäßen Polymere der Beispiele 1b und 1c durch sehr niedrige Cold-Flow-Werte aus. Aus Tabelle 3 geht hervor, dass die vulkanisierten Reifenlaufflächenmischungen 4b und 4c, die die erfindungsgemäßen Polymere 1b und 1c enthalten sowie die vulkanisierte Reifenlaufflächenmischung 4e, die das Vergleichspolymer 1e enthält zudem besonders vorteilhafte Prüfwerte für den Rollwiderstand, das Nassrutschverhalten und die Abriebbeständigkeit aufweisen.

### Beispiel 5a: Synthese von nicht funktionalisiertem Styrol-Butadien-Copolymer (Vergleichsbeispiel)

Ein inertisierter 20L-Reaktor wurde mit 8,5 kg Hexan, 1185 g 1,3-Butadien, 315 g Styrol, 8,6 mmol 2,2-Bis(2-tetrahydrofuryl)propan sowie 9,5 mmol Butyllithium befüllt und der Inhalt auf 60°C erwärmt. Es wurde unter Rühren 25 Minuten bei 60°C polymerisiert. Anschließend wurden 9,5 mmol Cetylalkohol zum Abstoppen der anionischen Polymerketttenenden zugesetzt, die Kautschuklösung abgelassen, durch Zugabe von 3 g Irganox® 1520 (2,4-Bis(octylthiomethyl)-6-methylphenol) stabilisiert und das Lösungsmittel durch Strippen mit Wasserdampf entfernt. Die Kautschukkrümel wurden bei 65°C im Vakuum getrocknet.

### Beispiel 5b: Synthese von carboxyterminiertem Styrol-Butadien-Copolymer durch Umsetzung mit Silalacton (erfindungsgemäß)

Es wurde wie in Beispiel 1b verfahren.

### Beispiel 5c: Synthese von hydroxyterminiertem Styrol-Butadien-Copolymer durch Umsetzung mit Caprolacton (Vergleichsbeispiel)

Es wurde wie in Beispiel 1d verfahren. Es wurden jedoch 10 mmol Butyllithium und eine äquimolare Menge an ε-Caprolacton eingesetzt.

### Beispiel 5d: Synthese von hydroxyterminiertem Styrol-Butadien-Copolymer durch Umsetzung mit 1-Oxa-2-silacycloalkan (Vergleichsbeispiel)

Es wurde wie in Beispiel 1e verfahren. Es wurden jedoch 9,5 mmol Butyllithium und eine äquimolare Menge an 2,2,4-Trimethyl-1-oxa-4-aza-2-silacyclohexan eingesetzt.

### Beispiel 5e: Synthese von silanolterminiertem Styrol-Butadien-Copolymer durch Umsetzung mit Hexamethylcyclotrisiloxan (Vergleichsbeispiel)

Es wurde wie in Beispiel 5d verfahren. An Stelle des 2,2,4-Trimethyl-1-oxa-4-aza-2-silacyclohexans wurde jedoch eine zu Butyllithium äquimolare Menge an Hexamethylcyclotrisiloxan eingesetzt.

Die Polymereigenschaften der Styrol-Butadien-Copolymere der Beispiele 5a-e sind in Tabelle 4 zusammengefasst.

### Beispiele 6a-e: Kautschukzusammensetzungen

Es wurden Reifenlaufflächenkautschukzusammensetzungen hergestellt, die die Styrol-Butadien-Copolymere der Beispiele 5a-e enthalten. Die Bestandteile sind in Tabelle 5 aufgelistet. Die Kautschukzusammensetzungen (ohne Schwefel und Beschleuniger) wurden in einem 1,5-L Kneter hergestellt. Die Bestandteile Schwefel und Beschleuniger wurden anschließend auf einer Walze bei 40°C zugemischt.

### Beispiel 7a-e: Extrusionsprofile

Zur Beurteilung des Verarbeitungsverhaltens der Kautschukzusammensetzungen der Beispiele 6a-e wurden wie zuvor beschrieben mittels eines Laborextruders bei 120°C Extrusionsprofile (Garvey-Profile) erstellt. Diese Garvey-Profile sind im Anhang, Abbildungen l/7a-e, dargestellt.

**Tabelle 4: Eigenschaften der Styrol-Butadien-Copolymere der Beispiele 5a-d**

| SSBR aus Bsp. | Funktionalisierungsreagenz | Vinyl-Gehalt ^{a)} [Gew.-%] | Styrol-Gehalt ^{a)} [Gew.-%] | Tg ^{b)} [°C] | M_{P}1 ^{c)} [kg/mol] | M_{P}2 ^{c)} [kg/mol] | Kopplungsgrad ^{c)} [%] | ML1+4 ^{d)} [ME] | Cold Flow ^{e)} [mg/min] |
|---|---|---|---|---|---|---|---|---|---|
| 5a (Vergleich) | - | 50,1 | 20,0 | -26 | 397 | - | 0 | 78 | 9 |
| 5b (erfindungsgemäß) | Silalacton | 50,7 | 21,2 | -22 | 260 | 534 | 61 | 88 | 0 |
| 5c (Vergleich) | Caprolacton | 50,4 | 21,9 | -22 | 366 | 791 | 27 | 87 | 2 |
| 5d (Vergleich) | 1-Oxa-2-silacyclohexan | 50,1 | 20,8 | -25 | 364 | - | 0 | 81 | 6 |
| 5e (Vergleich) | Hexamethylcyclotrisiloxan | 51,6 | 21,7 | -21 | 368 | - | 0 | 80 | 6 |

| | | | | | | | | | |
|---|---|---|---|---|---|---|---|---|---|
| a) Bestimmung des Vinyl- und Styrolgehalts mittels FTIR b) Bestimmung der Glasübergangstemperatur mittels DSC c) Bestimmung der Peak-Molekulargewichte M_{P}1 und M_{P}2 sowie des Kopplungsgrades mittels GPC (PS-Kalibrierung) d) Bestimmung der Mooney-Viskosität bei 100°C e) Bestimmung des Cold Flow bei 50°C | | | | | | | | | |

**Tabelle 5: Bestandteile der Reifenlaufflächenkautschukzusammensetzungen (Angaben in phr: Gewichtsteile pro 100 Gewichtsteile Kautschuk)**

| | **Vergleichsbeispiel** | **Erfindungsgemäßes Beispiel** | **Vergleichsbeispiel** | **Vergleichsbeispiel** | **Vergleichsbeispiel** |
|---|---|---|---|---|---|
| | **6a** | **6b** | **6c** | **6d** | **6e** |
| Styrol-Butadien-Copolymer aus Beispiel 5a | 70 | 0 | 0 | 0 | 0 |
| Styrol-Butadien-Copolymer aus Beispiel 5b | 0 | 70 | 0 | 0 | 0 |
| Styrol-Butadien-Copolymer aus Beispiel 5c | 0 | 0 | 70 | 0 | 0 |
| Styrol-Butadien-Copolymer aus Beispiel 5d | 0 | 0 | 0 | 70 | 0 |
| Styrol-Butadien-Copolymer aus Beispiel 5e | 0 | 0 | 0 | 0 | 70 |
| hoch-cis-haltiges Polybutadien (BUNA™ CB 24 der Lanxess Deutschland GmbH) | 30 | 30 | 30 | 30 | 30 |
| Kieselsäure (Ultrasil® 7000) | 90 | 90 | 90 | 90 | 90 |
| Ruß (Vulcan® J/N 375) | 7 | 7 | 7 | 7 | 7 |
| TDAE-Öl (Vivatec 500) | 36,3 | 36,3 | 36,3 | 36,3 | 36,3 |
| Verarbeitungshilfsmittel (Aflux 37) | 3 | 3 | 3 | 3 | 3 |
| Stearinsäure (Edenor C 18 98-100) | 1 | 1 | 1 | 1 | 1 |
| Alterungsschutzmittel (Vulkanox® 4020/LG der Lanxess Deutschland GmbH) | 2 | 2 | 2 | 2 | 2 |
| Alterungsschutzmittel (Vulkanox® HS/LG der Lanxess Deutschland GmbH) | 2 | 2 | 2 | 2 | 2 |
| Zinkoxid (Zinkweiß Rotsiegel) | 3 | 3 | 3 | 3 | 3 |
| Wachs (Antilux 654) | 2 | 2 | 2 | 2 | 2 |
| Silan (Si 69® von Evonik) | 7,2 | 7,2 | 7,2 | 7,2 | 7,2 |
| Diphenylguanidin (Rhenogran DPG-80) | 2,75 | 2,75 | 2,75 | 2,75 | 2,75 |
| Sulfenamid (Vulkacit® NZ/EGC der Lanxess Deutschland GmbH) | 1,6 | 1,6 | 1,6 | 1,6 | 1,6 |
| Schwefel (Mahlschwefel 90/95 Chancel) | 1,6 | 1,6 | 1,6 | 1,6 | 1,6 |
| Sulfonamid (Vulkalent® E/C) | 0,2 | 0,2 | 0,2 | 0,2 | 0,2 |

### Beispiele 8a-d: Vulkanisateiaenschaften

Die Reifenlaufflächenkautschukzusammensetzungen der Beispiele 6a-e nach Tabelle 5 wurden 20 Minuten bei 160°C vulkanisiert. Die Eigenschaften der entsprechenden Vulkanisate sind in Tabelle 6 als Beispiele 8a-e aufgeführt. Die Vulkanisateigenschaften der vulkanisierten Probe aus Vergleichsbeispiel 6a mit dem nicht funktionalisierten Styrol-Butadien-Copolymer sind mit dem Index 100 versehen. Alle Werte größer als 100 in Tabelle 6 bedeuten eine entsprechende prozentuale Verbesserung der jeweiligen Prüfeigenschaft.

**Tabelle 6: Vulkanisateigenschaften**

| | **Vergleichsbeispiel** | **Erfindungsgemäßes Beispiel** | **Vergleichsbeispiel** | **Vergleichsbeispiel** | **Vergleichsbeispiel** |
|---|---|---|---|---|---|
| | **8a** | **8b** | **8c** | **8d** | **8e** |
| **Styrol-Butadien-Copolymer im Vulkanisat:** | | | | | |
| Styrol-Butadien-Copolymer aus Beispiel 5a | X | | | | |
| Styrol-Butadien-Copolymer aus Beispiel 5b | | X | | | |
| Styrol-Butadien-Copolymer aus Beispiel 5c | | | X | | |
| Styrol-Butadien-Copolymer aus Beispiel 5d | | | | X | |
| Styrol-Butadien-Copolymer aus Beispiel 5e | | | | | X |

| **Vulkanisateigenschaften :** | | | | | |
|---|---|---|---|---|---|
| tan δ bei 0°C (dynamische Dämpfung bei 10 Hz) | 100 | 120 | 109 | 102 | 111 |
| tan δ bei 60°C (dynamische Dämpfung bei 10 Hz) | 100 | 113 | 115 | 122 | 112 |
| tan δ-Maximum (MTS-Amplitudensweep bei 1 Hz, 60°C) | 100 | 108 | 100 | 110 | 112 |
| ΔG* (G*@0.5% - G*@15% aus MTS-Amplitudensweep) [MPa] | 100 | 125 | 107 | 150 | 136 |
| Rückprallelastizität bei 60°C [%] | 100 | 107 | 110 | 109 | 105 |
| Abrieb (DIN 53516) [mm³] | 100 | 117 | 103 | 120 | 110 |

Wie aus Tabelle 4 ersichtlich, zeichnen sich alle Polymere der Beispiele 5a-e durch niedrige Cold-Flow-Werte aus. Wie die Abbildungen l/7a-e verdeutlichen, zeigen die Reifenlaufflächenkautschukzusammensetzungen 6a, 6b und 6c, die die Polymere der Beispiele 5a (Vergleich), 5b (erfindungsgemäß) und 5c (Vergleich) enthalten, gutes Verarbeitungsverhalten (glatte Garvey-Profile 7a, 7b, 7c). Die Reifenlaufflächenkautschukzusammensetzungen 6d und 6e, die die Vergleichspolymere 5d und 5e enthalten, besitzen dagegen ein schlechteres Verarbeitungsverhalten (raue Garvey-Profile 7d, 7e). Aus Tabelle 6 geht hervor, dass die vulkanisierte Reifenlaufflächenmischung 8b, die das erfindungsgemäße Polymer 5b enthält sowie die vulkanisierten Reifenlaufflächenmischungen 8d und 8e mit den Vergleichspolymeren 5d und 5e besonders vorteilhafte Prüfwerte für den Rollwiderstand, das Nassrutschverhalten und die Abriebbeständigkeit aufweisen.

Die Beispiele machen deutlich, das sich nur mit den erfindungsgemäßen Polymeren niedrige Cold-Flow-Werte, gutes Verarbeitungsverhalten der entsprechenden Reifenlaufflächenzusammensetzungen und gute Reifenlaufflächeneigenschaften der entsprechenden Vulkanisate kombinieren lassen.

Die erfindungsgemäßen Polymere 1b und 1c in der Versuchsreihe 1a-e weisen deutlich höhere ML-Werte gegenüber den Vergleichspolymeren dieser Reihe auf.

Auch die Vergleichspolymere der Versuchsreihe 5a, 5c, 5d und 5e weisen hohe ML-Werte und somit niedrige Cold Flow-Werte auf. Kautschukmischungen mit diesen Vergleichspolymeren der Versuchsreihe 5a-e zeigen jedoch schlechtere dynamische Eigenschaften (5a, 5c) oder schlechtes Verarbeitungsverhalten (5d, 5e). Somit kombinieren nur die erfindungsgemäßen Polymere bzw. deren Kautschukmischungen niedrigen Cold Flow, gute dynamische Eigenschaften und gutes Verarbeitungsverhalten.

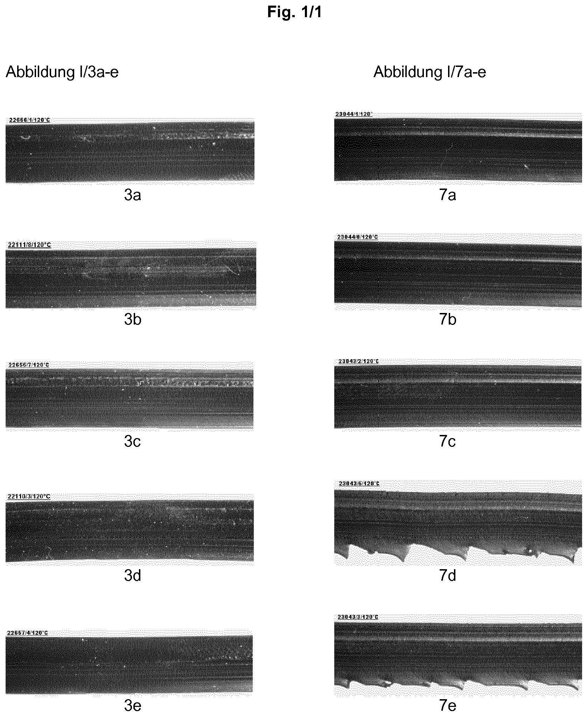

Die Extrusionsprofile 3a-e und 7a-e der Reifenlaufflächenkautschukzusammensetzungen 2a-e und 6a-e sind aus Fig. 1 ersichtlich.

## Patentansprüche

1. Endgruppenfunktionalisierte Polymere, **dadurch gekennzeichnet, dass** die Polymere am Polymerkettenende eine silanhaltige Carboxygruppe der Formel (I) 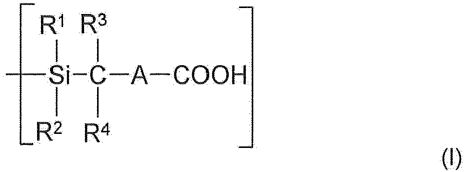 aufweisen, wobei
R¹, R² gleich oder verschieden sind und ein H, Alkyl-, Alkoxy-, Cycloalkyl-, Cycloalkoxy-, Aryl-, Aryloxy-, Alkaryl-, Alkaryloxy-, Aralkyl- oder Aralkoxyreste darstellen, die ein oder mehrere Heteroatome, bevorzugt O, N, S oder Si enthalten können,
R³, R⁴ gleich oder verschieden sind und ein H, Alkyl-, Cycloalkyl-, Aryl-, Alkaryl- oder Aralkylreste darstellen, die ein oder mehrere Heteroatome, bevorzugt O, N, S oder Si enthalten können,
A für einen divalenten organischen Rest steht, der neben C und H ein oder mehrere Heteroatome, bevorzugt O, N, S oder Si enthalten kann,
**dadurch gekennzeichnet, dass** es sich bei den Polymeren um Dienpolymere, bevorzugt Polybutadien oder Polyisopren, oder durch Copolymerisation von Dienen mit vinylaromatischen Monomeren erhältliche Dien-Copolymere, bevorzugt Butadien-Isopren-Copolymer, ein Butadien-Styrol-Copolymer, ein Isopren-Styrol-Copolymer oder ein Butadien-Isopren-Styrol-Terpolymer handelt.

2. Endgruppenfunktionalisierte Polymere nach Anspruch 1, **dadurch gekennzeichnet, dass** die Endgruppen der Polymere als Carboxylate der Formel (II) 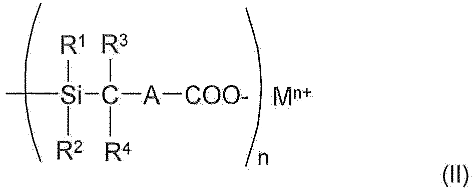 vorliegen, wobei
R¹, R² gleich oder verschieden sind und ein H, Alkyl-, Alkoxy-, Cycloalkyl-, Cycloalkoxy-, Aryl-, Aryloxy-, Alkaryl-, Alkaryloxy-, Aralkyl- oder Aralkoxyreste darstellen, die ein oder mehrere Heteroatome, bevorzugt O, N, S oder Si enthalten können,
R³, R⁴ gleich oder verschieden sind und ein H, Alkyl-, Cycloalkyl-, Aryl-, Alkaryl- oder Aralkylreste darstellen, die ein oder mehrere Heteroatome, bevorzugt O, N, S oder Si enthalten können,
A für einen divalenten organischen Rest steht, der neben C und H ein oder mehrere Heteroatome, bevorzugt O, N, S oder Si enthalten kann,
n eine ganze Zahl von 1 bis 4 ist,
M ein Metall oder Halbmetall der Wertigkeit 1 bis 4 ist, vorzugsweise Li, Na, K, Mg, Ca, Zn, Fe, Co, Ni, AI, Nd, Ti, Sn, Si, Zr, V, Mo oder W,
**dadurch gekennzeichnet, dass** es sich bei den Polymeren um Dienpolymere, bevorzugt Polybutadien oder Polyisopren, oder durch Copolymerisation von Dienen mit vinylaromatischen Monomeren erhältliche Dien-Copolymere, bevorzugt Butadien-Isopren-Copolymer, ein Butadien-Styrol-Copolymer, ein Isopren-Styrol-Copolymer oder ein Butadien-Isopren-Styrol-Terpolymer handelt.

3. Endgruppenfunktionalisierte Polymere nach einem der Ansprüche 1 bis 2, **dadurch gekennzeichnet, dass** das Polymer durch Umsetzung reaktiver Polymerkettenenden mit einem oder mehreren Funktionalisierungsreagenzien in Form von Silalactonen erhältlich ist.

4. Endgruppenfunktionalisierte Polymere nach Anspruch 3, **dadurch gekennzeichnet, dass** es sich bei den Silalactonen um Verbindungen der Formel (III) 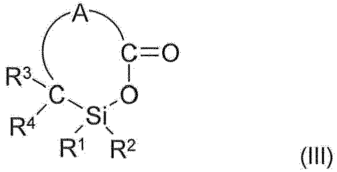 handelt, wobei
R¹, R² gleich oder verschieden sind und ein H, Alkyl-, Alkoxy-, Cycloalkyl-, Cycloalkoxy-, Aryl-, Aryloxy-, Alkaryl-, Alkaryloxy-, Aralkyl- oder Aralkoxyreste darstellen, die ein oder mehrere Heteroatome, bevorzugt O, N, S oder Si enthalten können,
R³, R⁴ gleich oder verschieden sind und ein H, Alkyl-, Cycloalkyl-, Aryl-, Alkaryl- oder Aralkylreste darstellen, die ein oder mehrere Heteroatome, bevorzugt O, N, S oder Si enthalten können,
A für einen divalenten organischen Rest steht, der neben C und H ein oder mehrere Heteroatome, bevorzugt O, N, S oder Si enthalten kann.

5. Polymermischung enthaltend
a) endgruppenfunktionalisierte Polymere nach einem der Ansprüche 1 bis 4 sowie
b) Dimere mit einem oder mehreren Strukturelementen abgeleitet von Silalactonen der Formel (III), bevorzugt mit einem Strukturelement der Formel (IV).

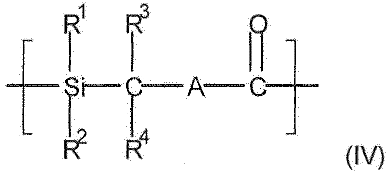

6. Polymermischungen nach Anspruch 5, **dadurch gekennzeichnet, dass** die Polymere mittlere Molgewichte (Zahlenmittel, Mₙ) von 10.000 bis 2.000.000 g/mol, bevorzugt von 100.000 bis 1.000.000 g/mol aufweisen.

7. Polymermischungen nach Anspruch 6, **dadurch gekennzeichnet, dass** die Polymere Glasübergangstemperaturen von -110°C bis +20°C, bevorzugt -110°C bis 0°C aufweisen.

8. Verwendung von Silalactonen als Funktionalisierungsreagenzien zur Herstellung von endgruppenfunktionalisierten Polymeren nach einem der Ansprüche 1 bis 4.

9. Verfahren zur Herstellung von endgruppenfunktionalisierten Polymeren nach einem der Ansprüche 1 bis 4, **dadurch gekennzeichnet, dass** ein oder mehrere Silalactone in stöchiometrischen Mengen, in einem Uberschuss oder einem Unterschuss zu Polymeren, insbesondere nach Abschluss der Polymerisation, mit reaktiven Polymerkettenenden zugegeben werden.

10. Verfahren nach Anspruch 9, **dadurch gekennzeichnet, dass** die Menge an Funktionalisierungsreagenzien von 0,005 bis 2 Gew.-%, bevorzugt von 0,01 bis 1 Gew.-%, bezogen auf die Menge an Polymer, beträgt.

11. Verwendung von Polymermischungen nach einem der Ansprüche 5 bis 7 zur Herstellung von vulkanisierbaren Kautschukzusammensetzungen.

12. Vulkanisierbare Kautschukzusammensetzungen enthaltend
a) Polymermischungen nach einem der Ansprüche 5 bis 7 sowie
b) Alterungsschutzmittel, Öle, Füllstoffe, Kautschuke und/oder weitere Kautschukhilfsmittel aufweisen.

13. Verwendung der vulkanisierbaren Kautschukzusammensetzungen nach Anspruch 12 zur Herstellung von Formkörpern, insbesondere Kabelmäntel, Schläuchen, Treibriemen, Förderbändern, Walzenbelägen, Schuhsohlen, Dichtungsringen, Dämpfungselementen oder Reifen, insbesondere Reifenlaufflächen.

14. Formkörper, insbesondere Reifen, erhältlich nach Anspruch 13.

## Claims

1. End group-functionalized polymers, **characterized in that** the polymers have, at the end of the polymer chain, a silane-containing carboxyl group of the formula (I) 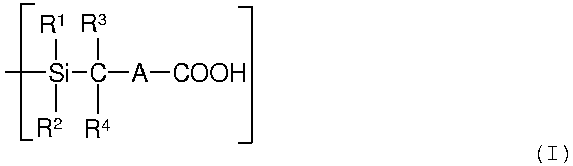 where
R¹, R² are the same or different and are each an H, alkyl, alkoxy, cycloalkyl, cycloalkoxy, aryl, aryloxy, alkaryl, alkaryloxy, aralkyl or aralkoxy radical which may contain one or more heteroatoms, preferably O, N, S or Si,
R³, R⁴ are the same or different and are each an H, alkyl, cycloalkyl, aryl, alkaryl or aralkyl radical which may contain one or more heteroatoms, preferably O, N, S or Si,
A is a divalent organic radical which, as well as C and H, may contain one or more heteroatoms, preferably O, N, S or Si,
**characterized in that** the polymers are diene polymers, preferably polybutadiene or polyisoprene, or diene copolymers obtainable by copolymerization of dienes with vinylaromatic monomers, preferably butadiene-isoprene copolymer, a butadiene-styrene copolymer, an isoprene-styrene copolymer or a butadiene-isoprene-styrene terpolymer.

2. End group-functionalized polymers according to Claim 1, **characterized in that** the end groups of the polymers are present as carboxylates of the formula (II) 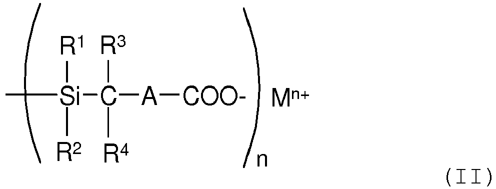 where
R¹, R² are the same or different and are each an H, alkyl, alkoxy, cycloalkyl, cycloalkoxy, aryl, aryloxy, alkaryl, alkaryloxy, aralkyl or aralkoxy radical which may contain one or more heteroatoms, preferably O, N, S or Si,
R³, R⁴ are the same or different and are each an H, alkyl, cycloalkyl, aryl, alkaryl or aralkyl radical which may contain one or more heteroatoms, preferably O, N, S or Si,
A is a divalent organic radical which, as well as C and H, may contain one or more heteroatoms, preferably O, N, S or Si,
n is an integer from 1 to 4,
M is a metal or semimetal of valency 1 to 4, preferably Li, Na, K, Mg, Ca, Zn, Fe, Co, Ni, Al, Nd, Ti, Sn, Si, Zr, V, Mo or W,
**characterized in that** the polymers are diene polymers, preferably polybutadiene or polyisoprene, or diene copolymers obtainable by copolymerization of dienes with vinylaromatic monomers, preferably butadiene-isoprene copolymer, a butadiene-styrene copolymer, an isoprene-styrene copolymer or a butadiene-isoprene-styrene terpolymer.

3. End group-functionalized polymers according to either of Claims 1 and 2, **characterized in that** the polymer is obtainable by reaction of reactive ends of the polymer chain with one or more functionalizing reagents in the form of silalactones.

4. End group-functionalized polymers according to Claim 3, **characterized in that** the silalactones are compounds of the formula (III) 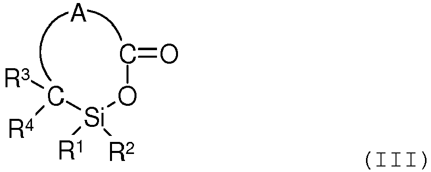 where
R¹, R² are the same or different and are each an H, alkyl, alkoxy, cycloalkyl, cycloalkoxy, aryl, aryloxy, alkaryl, alkaryloxy, aralkyl or aralkoxy radical which may contain one or more heteroatoms, preferably O, N, S or Si,
R³, R⁴ are the same or different and are each an H, alkyl, cycloalkyl, aryl, alkaryl or aralkyl radical which may contain one or more heteroatoms, preferably O, N, S or Si,
A is a divalent organic radical which, as well as C and H, may contain one or more heteroatoms, preferably O, N, S or Si.

5. Polymer mixture comprising
a) end group-functionalized polymers according to any of Claims 1 to 4 and
b) dimers having one or more structural elements derived from silalactones of the formula (III), preferably having a structural element of the formula (IV).

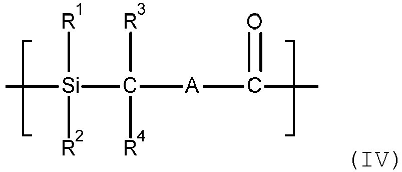

6. Polymer mixtures according to Claim 5, **characterized in that** the polymers have mean molar masses (number-average, Mₙ) of 10 000 to 2 000 000 g/mol, preferably of 100 000 to 1 000 000 g/mol.

7. Polymer mixtures according to Claim 6, **characterized in that** the polymers have glass transition temperatures of -110°C to +20°C, preferably -110°C to 0°C.

8. Use of silalactones as functionalizing reagents for preparation of end group-functionalized polymers according to any of Claims 1 to 4.

9. Process for preparing end group-functionalized polymers according to any of Claims 1 to 4, **characterized in that** one or more silalactones are added in stoichiometric amounts, in an excess or in a deficiency to give polymers, especially following conclusion of the polymerization, having reactive ends of the polymer chains.

10. Process according to Claim 9, **characterized in that** the amount of functionalizing reagents is from 0.005 to 2% by weight, preferably from 0.01 to 1% by weight, based on the amount of polymer.

11. Use of polymer mixtures according to any of Claims 5 to 7 for production of vulcanizable rubber compositions.

12. Vulcanizable rubber compositions comprising
a) polymer mixtures according to any of Claims 5 to 7 and
b) ageing stabilizers, oils, fillers, rubbers and/or further rubber auxiliaries.

13. Use of the vulcanizable rubber compositions according to Claim 12 for production of mouldings, especially cable sheaths, hoses, drive belts, conveyor belts, roll covers, shoe soles, gasket rings, damping elements or tyres, especially tyre treads.

14. Mouldings, especially tyres, obtainable according to Claim 13

## Revendications

1. Polymères fonctionnalisés par des groupes terminaux, **caractérisés en ce que** les polymères comprennent à l'extrémité de la chaîne polymère un groupe carboxy contenant un silane de la formule (I) : 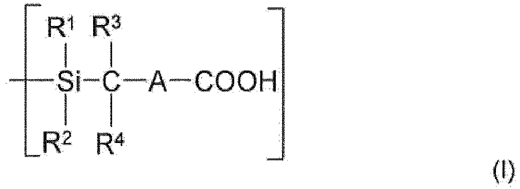 dans laquelle
R¹, R² sont identiques ou différents, et représentent un radical H, alkyle, alcoxy, cycloalkyle, cycloalcoxy, aryle, aryloxy, alkaryle, alkaryloxy, aralkyle ou aralcoxy, qui peut contenir un ou plusieurs hétéroatomes, de préférence O, N, S ou Si,
R³, R⁴ sont identiques ou différents, et représentent un radical H, alkyle, cycloalkyle, aryle, alkaryle ou aralkyle, qui peut contenir un ou plusieurs hétéroatomes, de préférence O, N, S ou Si,
A représente un radical organique bivalent, qui peut contenir un ou plusieurs hétéroatomes, de préférence O, N, S ou Si, en plus de C et H,
**caractérisés en ce que** les polymères consistent en des polymères diéniques, de préférence le polybutadiène ou le polyisoprène, ou des copolymères diéniques pouvant être obtenus par copolymérisation de diènes avec des monomères aromatiques de vinyle, de préférence un copolymère de butadiène-isoprène, un copolymère de butadiène-styrène, un copolymère d'isoprène-styrène, ou un terpolymère de butadiène-isoprène-styrène.

2. Polymères fonctionnalisés par des groupes terminaux selon la revendication 1, **caractérisés en ce que** les groupes terminaux des polymères se présentent sous la forme de carboxylates de la formule (II) : 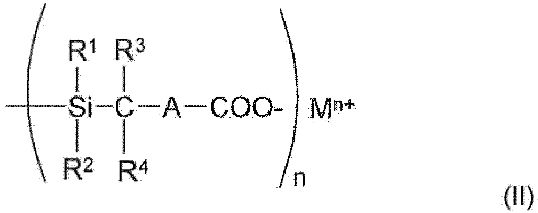 dans laquelle
R¹, R² sont identiques ou différents, et représentent un radical H, alkyle, alcoxy, cycloalkyle, cycloalcoxy, aryle, aryloxy, alkaryle, alkaryloxy, aralkyle ou aralcoxy, qui peut contenir un ou plusieurs hétéroatomes, de préférence O, N, S ou Si,
R³, R⁴ sont identiques ou différents, et représentent un radical H, alkyle, cycloalkyle, aryle, alkaryle ou aralkyle, qui peut contenir un ou plusieurs hétéroatomes, de préférence O, N, S ou Si,
A représente un radical organique bivalent, qui peut contenir un ou plusieurs hétéroatomes, de préférence O, N, S ou Si, en plus de C et H,
n représente un nombre entier de 1 à 4,
M représente un métal ou semi-métal d'une valence de 1 à 4, de préférence Li, Na, K, Mg, Ca, Zn, Fe, Co, Ni, Al, Nd, Ti, Sn, Si, Zr, V, Mo ou W,
**caractérisés en ce que** les polymères consistent en des polymères diéniques, de préférence le polybutadiène ou le polyisoprène, ou des copolymères diéniques pouvant être obtenus par copolymérisation de diènes avec des monomères aromatiques de vinyle, de préférence un copolymère de butadiène-isoprène, un copolymère de butadiène-styrène, un copolymère d'isoprène-styrène, ou un terpolymère de butadiène-isoprène-styrène.

3. Polymères fonctionnalisés par des groupes terminaux selon l'une quelconque des revendications 1 à 2, **caractérisés en ce que** le polymère peut être obtenu par mise en réaction d'extrémités de chaînes polymères réactives avec un ou plusieurs réactifs de fonctionnalisation sous la forme de silalactones.

4. Polymères fonctionnalisés par des groupes terminaux selon la revendication 3, **caractérisés en ce que** les silalactones consistent en des composés de la formule (III) : 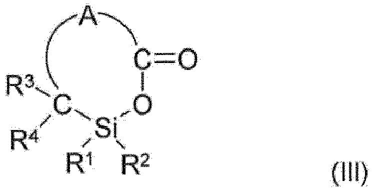 d ans laquelle
R¹, R² sont identiques ou différents, et représentent un radical H, alkyle, alcoxy, cycloalkyle, cycloalcoxy, aryle, aryloxy, alkaryle, alkaryloxy, aralkyle ou aralcoxy, qui peut contenir un ou plusieurs hétéroatomes, de préférence O, N, S ou Si,
R³, R⁴ sont identiques ou différents, et représentent un radical H, alkyle, cycloalkyle, aryle, alkaryle ou aralkyle, qui peut contenir un ou plusieurs hétéroatomes, de préférence O, N, S ou Si,
A représente un radical organique bivalent, qui peut contenir un ou plusieurs hétéroatomes, de préférence O, N, S ou Si, en plus de C et H.

5. Mélange de polymères, contenant :
a) des polymères fonctionnalisés par des groupes terminaux selon l'une quelconque des revendications 1 à 4, et
b) des dimères contenant un ou plusieurs éléments structuraux dérivés de silalactones de la formule (III), de préférence contenant un élément structural de la formule (IV) :

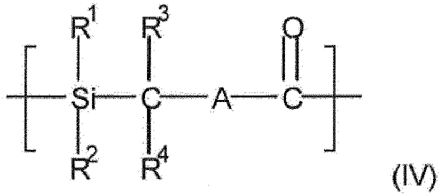

6. Mélanges de polymères selon la revendication 5, **caractérisés en ce que** les polymères présentent des poids moléculaires moyens (moyenne en nombre, Mₙ) de 10 000 à 2 000 000 g/mol, de préférence de 100 000 à 1 000 000 g/mol.

7. Mélanges de polymères selon la revendication 6, **caractérisés en ce que** les polymères présentent des températures de transition vitreuse de -110 °C à +20 °C, de préférence de -110 °C à 0 °C.

8. Utilisation de silalactones en tant que réactifs de fonctionnalisation pour la fabrication de polymères fonctionnalisés par des groupes terminaux selon l'une quelconque des revendications 1 à 4.

9. Procédé de fabrication de polymères fonctionnalisés par des groupes terminaux selon l'une quelconque des revendications 1 à 4, **caractérisé en ce qu'**une ou plusieurs silalactones sont ajoutées en quantités stoechiométriques, en excès ou en déficit à des polymères, notamment après la fin de la polymérisation, contenant des extrémités de chaînes polymères réactives.

10. Procédé selon la revendication 9, **caractérisé en ce que** la quantité de réactifs de fonctionnalisation est de 0,005 à 2 % en poids, de préférence de 0,01 à 1 % en poids, par rapport à la quantité de polymère.

11. Utilisation de mélanges de polymères selon l'une quelconque des revendications 5 à 7 pour la fabrication de compositions de caoutchouc vulcanisables.

12. Compositions de caoutchouc vulcanisables, contenant :
a) des mélanges de polymères selon l'une quelconque des revendications 5 à 7, et
b) des agents antivieillissement, des huiles, des charges, des caoutchoucs et/ou d'autres adjuvants de caoutchouc.

13. Utilisation des compositions de caoutchouc vulcanisables selon la revendication 12 pour la fabrication de corps moulés, notamment de gaines de câbles, de tuyaux, de courroies d'entraînement, de bandes de transport, de revêtements de cylindres, de semelles de chaussures, de bagues d'étanchéité, d'éléments d'amortissement ou de pneus, notamment de surfaces de roulement de pneus.

14. Corps moulé, notamment pneu, pouvant être obtenu selon la revendication 13.
